# EUROPÄISCHE PATENTSCHRIFT

(11) **EP 4 404 812 B1**
(45) Veröffentlichungstag und Bekanntmachung des Hinweises auf die Patenterteilung: **25.03.2026**
(21) Anmeldenummer: 22772966.2
(22) Anmeldetag: 05.09.2022
(51) Int. Cl.: A47L 11/40, A47L 9/28

(54) **VERFAHREN ZUM BETRIEB EINES MOBILEN, SELBSTFAHRENDEN GERÄTS**
METHOD OF OPERATING A MOBILE SELF-PROPELLED DEVICE
PROCÉDÉ D'EXPLOITATION D'UN ENGIN MOBILE AUTOMOTEUR

(30) Priorität: 24.09.2021 DE 102021210678
(43) Veröffentlichungstag der Anmeldung: 31.07.2024
(73) Patentinhaber: BSH Hausgeräte GmbH, 81739 München (DE)
(72) Erfinder: DANIEL, Kristina, 97616 Bad Neustadt (DE); SCHNITZER, Frank, 97616 Bad Neustadt (DE); SCHMITT, Kai, 97633 Saal (DE)
(86) Internationale Anmeldenummer: PCT/EP2022/074573
(87) Internationale Veröffentlichungsnummer: WO 2023/046449

(56) Entgegenhaltungen:
- EP-A1- 3 825 802
- EP-A1- 3 862 938
- DE-A1- 102017 109 219
- US-A1- 2014 207 281

## Beschreibung

Die Erfindung betrifft ein Verfahren zum Betrieb eines mobilen, selbstfahrenden Geräts, insbesondere Bodenreinigungsgerät wie einen Saug- und/oder Kehr- und/oder Wischroboter, zur autonomen Bearbeitung von Bodenflächen.

Mobile, selbstfahrende Geräte wie beispielsweise Saugroboter haben die Aufgabe, autonom möglichst eine gesamte Bodenfläche zu reinigen. Dabei sollen diese Geräte ihre Reinigungsaufgaben möglichst selbstständig ausführen, bevorzugt ohne einen expliziten Befehl eines Nutzers zu erhalten. Bekannte Reinigungsroboter bieten hierfür unter anderem Reinigungspläne an, bei denen der Nutzer definieren kann, zu welcher Zeit welcher Raum zu reinigen ist. In diesen Plänen wird dem Reinigungsroboter genau vorgegeben, zu welcher Zeit der Reinigungsauftrag starten soll.

Sollen über die Woche verteilt mehrere Räume oder ein Raum mehrfach gereinigt werden, so muss der Nutzer selbst die Übersicht behalten, wann welcher Reinigungsauftrag starten soll. Für Nutzer mit anspruchsvollen Vorstellungen für die Reinigungshäufigkeit verschiedener Räume kann sich dadurch unter Umständen eine komplexe Aufstellung ergeben, die der Nutzer selbst zu verwalten hat.

Findet während den Reinigungsaufträgen ein unvorhergesehenes Ereignis statt, beispielsweise, indem der Nutzer den Reinigungsroboter beim Arbeiten stoppt, um nicht gestört zu werden, oder indem eine Tür verschlossen ist, wodurch der Reinigungsroboter einen zu reinigenden Raum nicht reinigen kann, so wird der Reinigungsauftrag gegebenenfalls nicht oder zumindest nicht vollständig ausgeführt. Eine erneute Reinigung ist dabei nicht vorgesehen. Dies kann für den Nutzer unbefriedigend sein.

Verfahren zum Ein- und/oder Aufteilen von Arbeitsaufträgen von Reinigungsrobotern sind beispielsweise aus den Druckschriften US 2014/207281 A1, DE 10 2017 109219 A1, EP 3 825 802 A1 und EP 3 862 938 A1 bekannt.

Aufgabe der Erfindung ist es, ein Verfahren zum Betrieb eines mobilen, selbstfahrenden Geräts, insbesondere Bodenreinigungsgeräts, bereitzustellen, dass die oben genannten Nachteile vermeidet, und insbesondere eine automatische und/oder flexible Aufgabenplanung durch das mobile, selbstfahrende Gerät gewährleistet.

Diese Aufgabe wird durch ein Verfahren zum Betrieb eines mobilen, selbstfahrenden Geräts mit den Merkmalen des Anspruchs 1 gelöst. Vorteilhafte Ausgestaltungen und Weiterbildungen sind Gegenstand der Unteransprüche.

Erfindungsgemäß gibt bei einem Verfahren zum Betrieb eines mobilen, selbstfahrenden Geräts, insbesondere eines Bodenreinigungsgeräts wie ein Saug- und/oder Kehr- und/oder Wischroboter, ein Nutzer an einem trabgaren Zusatzgerät vor, welche zumindest eine Reinigungsaufgabe, insbesondere Bodenflächenreinigung, in zumindest einem vorgegebenen Zeitfenster durchzuführen ist. Zudem bestimmt der Nutzer eine Anzahl an Ausführungen in diesem vorgegebenen Zeitfenster sowie weitere Reinigungsparameter und/oder Randbedingungen, wobei das mobile, selbstfahrende Gerät selbsttätig eine Aufgabenverteilung und/oder Aufgabenplanung generiert, wann welche Reinigungsaufgaben in dem vorgegebenen Zeitfenster mit den vorgesehenen Reinigungsparametern und/oder Randbedingungen ausgeführt werden, und wobei die Aufgabenverteilung mittels eines Planungsalgorithmus und/oder eines Optimierungsalgorithmus erstellt wird, der Reinigungsaufträge mit ähnlichem oder identischem Ziel möglichst gleichmäßig über das Zeitfenster verteilt.

Vorliegend wird also ein Verfahren beschrieben, bei dem eine automatische und/oder flexible Aufgabenverteilung beziehungsweise Aufgabenplanung durch das mobile, selbstfahrende Gerät erfolgt, wobei der Nutzer zum Beispiel lediglich vorgibt, welche Räume er wie oft reinigen lassen möchte, und in welchem Zeitfenster das Gerät sich diese Aufgaben frei einteilen kann. Eine Anpassung der Aufgabenplanung und eine Verschiebung von Aufträgen im Fall, dass diese nicht stattfinden konnten, erfolgt vorzugsweise selbstständig durch das Gerät. Bevorzugt überlässt der Nutzer also dem Gerät die Aufgabenverteilung zur Abarbeitung der Reinigungsaufgaben. Geplante, aber unvollständig durchgeführte oder gänzlich verhinderte Reinigungsaufgaben werden von dem Gerät selbst neu eingeplant, um die Reinigung nicht ausfallen lassen zu müssen.

Erfindungsgemäß wird also vom Nutzer nicht fest definiert, an welchen Tagen und zu welcher Zeit welches Reinigungsprogramm durchgeführt wird. Stattdessen legt der Nutzer fest, welche Bereiche der Wohnung wie oft pro Tag, pro Woche oder pro Monat gereinigt werden sollen. Dabei werden dem mobilen, selbstfahrenden Gerät Zeitfenster, also erlaubte Tage und/oder erlaubte Zeitbereiche, zur Verfügung gestellt, in denen das Gerät frei einteilen kann, wann es welche Reinigungsaufgabe durchführt. Solche Zeitfenster können beispielsweise sein, wenn der Nutzer weiß, dass er nicht zuhause ist, die Kinder im Kindergarten sind und/oder der Nutzer in der Arbeit ist. Für den Nutzer ist eine solche Form der Aufgabenverteilung einfacher handhabbar, da er sich nicht im Detail darum kümmern muss, an welchen Tagen und zu welchen Uhrzeiten welche Aufgabe durchgeführt werden sollen.

Mit Vorteil ergibt sich für den Nutzer dadurch weniger Planungsaufwand für zeitgesteuerte Aufgaben, da das mobile, selbstfahrende Gerät die Verteilung und Einplanung der vorgegebenen Aufgaben selbst übernimmt. Dem Nutzer bietet sich so eine übersichtliche Aufstellung über die geplanten Aufgaben und deren Häufigkeit. Zudem ergibt sich für den Nutzer die Sicherheit, dass von ihm definierte Aufgaben durchgeführt werden, selbst wenn unvorhergesehene Ereignisse dazwischenkommen. Aufgaben werden automatisch verschoben, wenn sie nicht in dem vorher geplanten Zeitfenster ausgeführt werden konnten. Eine adaptive und flexible Aufgabenverteilung ergibt sich mit Vorteil. Trotz unvorhergesehener Ereignisse finden die gewünschten Reinigungen zuverlässig statt. Persönliche Präferenzen des Nutzers finden dabei weiterhin Beachtung.

Unter einem mobilen, selbstfahrenden Gerät ist insbesondere ein Bodenreinigungsgerät, beispielsweise Reinigungs- oder Rasenmähergerät, zu verstehen, welches insbesondere im Haushaltsbereich Bodenflächen oder Rasenflächen autonom bearbeitet. Hierunter zählen unter anderem Saug- und/oder Kehr- und/oder Wischroboter wie beispielsweise Staubsaugerroboter, oder Rasenmäherroboter. Diese Geräte arbeiten im Betrieb (Reinigungsbetrieb oder Rasenmäherbetrieb) bevorzugt ohne oder mit möglichst wenig Nutzereingriff. Beispielsweise fährt das Gerät selbsttätig in einen vorgegebenen Raum, um entsprechend einer vorgegebenen und einprogrammierten Verfahrensstrategie den Boden ab zu reinigen.

Um hierbei jegliche individuelle Umgebungsbesonderheiten beachten zu können, findet bevorzugt eine Explorationsfahrt mit dem mobilen, selbstfahrenden Reinigungsgerät statt. Unter einer Explorationsfahrt ist insbesondere eine Erkundungsfahrt zu verstehen, die dazu geeignet ist, eine zu bearbeitende Bodenfläche nach Hindernissen, Raumaufteilung und ähnlichem zu erkunden. Ziel einer Explorationsfahrt ist es insbesondere, Gegebenheiten des zu bearbeitenden Bodenbearbeitungsbereich einschätzen und/oder darstellen zu können.

Nach der Explorationsfahrt kennt das mobile, selbstfahrende Gerät seine Umgebung und kann diese in Form einer Umgebungskarte an den Nutzer weitergeben, zum Beispiel in einer App an einem Mobilgerät. In der Umgebungskarte kann dem Nutzer die Möglichkeit gegeben werden, mit dem mobilen, selbstfahrenden Gerät zu interagieren. Der Nutzer kann mit Vorteil Informationen in der Umgebungskarte einsehen und bei Bedarf ändern und/oder anpassen.

Unter einer Umgebungskarte ist insbesondere jegliche Karte zu verstehen, die geeignet ist, die Umgebung des Bodenbearbeitungsbereichs mit all seinen Hindernissen und Gegenständen darzustellen. Beispielsweise zeigt die Umgebungskarte den Bodenbearbeitungsbereich mit den darin enthaltenen Möbeln und Wänden skizzenartig an.

Die Umgebungskarte mit den Hindernissen wird vorzugsweise in der App an einem tragbaren Zusatzgerät dargestellt. Dies dient insbesondere der Visualisierung zu einer möglichen Interaktion für den Nutzer.

Unter einem Zusatzgerät ist vorliegend insbesondere jegliches Gerät zu verstehen, das für einen Benutzer tragbar ist, das außerhalb des mobilen, selbstfahrenden Geräts angeordnet, insbesondere extern und/oder differenziert vom mobilen, selbstfahrenden Gerät ist, und zu einer Anzeige, Bereitstellung, Übermittlung und/oder Übertragung von Daten geeignet ist, wie beispielsweise ein Handy, ein Smartphone, ein Tablet und/oder ein Computer beziehungsweise Laptop.

Auf dem tragbaren Zusatzgerät ist insbesondere die App, insbesondere eine Reinigungs-App, installiert, die zur Kommunikation des mobilen, selbstfahrenden Geräts mit dem Zusatzgerät dient und insbesondere eine Visualisierung des Bodenbearbeitungsbereichs, also des zu reinigenden Wohnraums oder der zu reinigenden Wohnung beziehungsweise des Wohnbereichs ermöglicht. Die App zeigt dem Nutzer dabei vorzugsweise den zu reinigenden Bereich als Umgebungskarte sowie jegliche Hindernisse an.

Unter einem vorgegebenen Zeitfenster sind beispielsweise erlaubte Wochentage und/oder erlaubte Zeitbereiche pro Tag, pro Woche und/oder pro Monat zu verstehen, die nicht unmittelbar aneinander angrenzend sein müssen. Solche Zeitfenster sind zum Beispiel sinnvoll, wenn der Nutzer weiß, dass er nicht zuhause ist, weil er in der Arbeit ist. Ein vorgegebenes Zeitfenster (pro Woche) kann beispielsweise wie folgt sein: Montag bis Donnerstag von 8 Uhr bis 16 Uhr, Freitag von 8 Uhr bis 12 Uhr und Samstag von 12 Uhr bis 16 Uhr.

Unter einer Anzahl an Ausführungen ist insbesondere die Häufigkeit der identischen oder zumindest ähnlichen, zu tätigenden Reinigungsaufgaben im vorgegebenen Zeitfenster zu verstehen. Zum Beispiel kann als Anzahl an Ausführungen folgendes vom Nutzer angegeben sein: dreimal im vorgegebenen Zeitfenster (beispielsweise pro Woche). In dem oben angegebenen Zeitfenster wird zum Beispiel dreimal pro Woche die Küche gesaugt, beispielsweise Montag um 10 Uhr, Mittwoch um 11 Uhr und Freitag um 11 Uhr.

Unter weitere Reinigungsparameter sind beispielsweise der Reinigungsmodus, die Reinigungsleistung, die maximale Lautstärke, die Wassermenge bei Wischrobotern und ähnliches zu verstehen.

Unter Randbedingungen sind insbesondere jegliche Bedingungen zu verstehen, die mit dem Zeitfenster noch nicht abgedeckt sind. Beispielsweise ist in dem Zeitfenster eine Zeitspanne definiert, in dem das mobile, selbstfahrende Gerät saugen soll, aber zum Beispiel nur in Räumen oder mit Geräteeinstellungen, in/mit denen der Nutzer in dem besagten Zeitfenster nicht gestört wird.

Unter selbsttätig ist insbesondere selbstständig, automatisch und/oder ohne Nutzereingriff zu verstehen. Das mobile, selbstfahrende Gerät kann also frei einteilen, wann es welche Reinigungsaufgabe im vorgegebenen Zeitfenster erledigt. Der Nutzer muss sich nicht im Detail darum kümmern, an welchen Tagen und zu welchen Uhrzeiten welche Aufgaben durchzuführen sind. Es wird also nicht fest definiert, an welchen Tagen und zu welcher Zeit welches Reinigungsprogramm durchgeführt wird. Stattdessen legt der Nutzer zum Beispiel allgemein fest, welche Bereiche der Wohnung wie oft pro Woche bzw. pro Monat zu reinigen sind. Die exakte Planung unter Beachtung der Vorgaben des Nutzers übernimmt anschließend das mobile, selbstfahrende Gerät selbst.

Unter einer Aufgabenverteilung ist insbesondere die detaillierte Planung des Reinigungsplans zu verstehen. Insbesondere werden bei der Aufgabenverteilung genaue Zeiten und/oder eine Dauer zum Bearbeiten bestimmter Reinigungstätigkeiten festgelegt.

Unter der zu bearbeitenden Bodenfläche ist jegliche zu reinigende Raumfläche zu verstehen. Hierunter fallen unter anderem auch Teilbereiche einzelner Räume, einzelne Flächen einer Wohnung, einzelne Räume einer Wohnung und/oder die gesamte Bodenfläche der vollständigen Wohnung beziehungsweise des Wohnraums.

Bei einer vorteilhaften Ausführungsform wird von dem mobilen, selbstfahrenden Gerät eine automatische Aufgabenverteilung durchgeführt. Insbesondere werden dem Gerät Zeitfenster zur Verfügung gestellt, in denen das Gerät frei einteilen kann, wann es welche Aufgabe übernimmt. Eine für das Gerät optimale Aufgabenverteilung ermöglicht sich mit Vorteil.

Bei einer weiteren vorteilhaften Ausführungsform wird eine vom Nutzer geplante, aber unvollständig durchgeführte oder verhinderte Reinigungsaufgabe von dem mobilen, selbstfahrenden Gerät neu eingeplant. In dem Fall, dass eine Reinigungsaufgabe nicht wie geplant ausgeführt werden kann, wird diese Aufgabe nachträglich auf ein anderes Zeitfenster geschoben und automatisch, also ohne Nutzereingriff, nachgeholt. Der Nutzer muss so mit Vorteil keine Handlung vornehmen und sich insbesondere keine Gedanken machen, ob sich eine von dem Nutzer durchgeführte Aktion mit einer geplanten Aufgabe des Geräts überschneidet. Insbesondere das Gerät sorgt selbsttätig beziehungsweise selbstständig dafür, dass alle gewünschten Aufgaben ausgeführt werden.

Wird beispielsweise die Ausführung des Reinigungsauftrags an einem Montagmorgen dadurch verhindert, dass der Nutzer einen spontanen Reinigungsauftrag gestartet hat, oder dass der Nutzer eine "heute nicht reinigen"-Taste gedrückt hat, so wird der verpasste Reinigungsauftrag zum Beispiel am Montagnachmittag oder am Dienstag neu eingeplant.

Bei einer weiteren vorteilhaften Ausführungsform sind die weiteren Reinigungsparameter und/oder Randbedingungen der Reinigungsmodus, die Reinigungsleistung, die maximale Lautstärke und/oder die Wassermenge.

Bei einer weiteren vorteilhaften Ausführungsform werden für die auszuführenden Reinigungsaufgaben ein gemeinsames Zeitfenster und/oder zumindest teilweise unterschiedliche Zeitfenster vorgegeben. Insbesondere spezifiziert der Nutzer an dem tragbaren Zusatzgerät in der dazugehörigen Reinigungs-App, welche Zeitfenster er für welches Reinigungsprogramm erlauben möchte. Neben der Angabe von Uhrzeiten, wie beispielsweise Start und Ende des Zeitfensters, kann der Nutzer den Zeitfenstern auch Wochentage zuordnen und so verschiedene Randbedingungen für verschiedene Tage abbilden. Die Zuordnung der festgelegten Reinigungsaufgaben zu den erlaubten Zeitfenstern erfolgt dabei durch das mobile, selbstfahrende Gerät.

Erfindungsgemäß wird die Aufgabenverteilung mittels eines Planungsalgorithmus und/oder eines Optimierungsalgorithmus erstellt. Insbesondere wird zumindest nach jeder Änderung der Eingabe des Nutzers, bevorzugt in regelmäßigen Abständen, der Planungs- und Optimierungsalgorithmus die vom Nutzer definierten Aufgaben in die vorgegebenen Zeitfenster einplanen. Beispielsweise können die Reinigungsaufgaben derselben Räume über eine Woche gleichverteilt werden. Ist zum Beispiel die Reinigung eines Raumes dreimal pro Woche geplant und auf Werktage limitiert, werden die Aufgaben für Montag, Mittwoch und Freitag vorgesehen, sofern erlaubte Zeitfenster und übrige Reinigungsaufgaben dies erlauben.

Bei einer weiteren vorteilhaften Ausführungsform greift der Planungsalgorithmus und/oder Optimierungsalgorithmus auf gespeicherte Protokolldaten zurückliegender Reinigungsaufträge zurück. So können beispielsweise auf benötigte Dauer der jeweiligen Reinigungsaufgabe, benötigte und/oder verbrauchte Akkuladung je Raum bei vorbestimmten Reinigungsparameter und/oder notwendige Zeiten für ein Nachladen des Akkus in die Optimierung des Reinigungsplanes einfließen. So kann das mobile, selbstfahrende Gerät beispielsweise vorab die Reinigungsaufgaben in verschiedene Zeitfenster eines Wochentages verteilen, um das Nachladen des Akkus zu berücksichtigen. Eine optimierte Aufgabenverteilung mit optimaler Akkuladung ermöglicht sich mit Vorteil.

Das Ergebnis der aktuellen Aufgabenverteilung kann dem Nutzer bei Bedarf in der Reinigungs-App auf dem tragbaren Zusatzgerät angezeigt werden, beispielsweise in Form einer Liste oder einer Matrix-Tabelle mit Wochentagen und Zeitfenstern wie bei einem Stundenplan.

Erfindungsgemäß verteilt der Planungsalgorithmus und/oder Optimierungsalgorithmus Reinigungsaufträge mit ähnlichen oder identischen Zielen insbesondere möglichst gleichmäßig über das Zeitfenster. Dadurch kann insbesondere eine Dopplung von Aufgaben vermieden werden. Insbesondere prüft der Planungsalgorithmus und/oder Optimierungsalgorithmus bei der Planung oder bei dem Verschieben von Aufgaben, ob in den entsprechenden Zeitfenstern beziehungsweise am entsprechenden Tag Reinigungsaufträge mit einem ähnlichen oder identischen Ziel vorhanden sind. So muss beispielsweise eine Reinigung, die der Nutzer siebenmal pro Woche vorgibt, nicht zwingend zweimal am gleichen Tag stattfinden.

Bei einer weiteren vorteilhaften Ausführungsform werden dem Nutzer fehlende Zeitfenster und/oder Rückmeldungen zu einer verbesserten Aufgabenverteilung an dem tragbaren Zusatzgerät angezeigt. Während der Planungsphase für die Aufgabenverteilung prüft der Planungsalgorithmus also nicht nur, welche Reinigungsaufgaben in welchen Zeitfenstern stattfinden können, sondern auch, ob die vorgesehenen Reinigungsaufgaben in die vorgegebenen Zeitfenster eingepasst werden können. Wird dabei festgestellt, dass beispielsweise eine Reinigungsaufgabe auf bestimmte Tage limitiert ist, aber für diese Tage kein oder nur ein unzureichend langes Zeitfenster zur Verfügung gestellt wird, wird der Nutzer instantan darüber informiert. Wird keine Änderung durch den Nutzer vorgenommen, können je nach Ausführung die Aufgaben ausgelassen werden, oder mit einem zusätzlichen Hinweis an den Nutzer an Tagen mit gegebenen Zeitfenstern eingeplant werden. Die Information über fehlende Zeitfenster kann dem Nutzer direkt in der Reinigungs-App an dem tragbaren Zusatzgerät angezeigt werden.

Weiter kann dem Nutzer beispielsweise Rückmeldung gegeben werden, ob die vorhandenen Zeitfenster für die definierten Reinigungsaufgaben ausreichend sind, oder ob Zeitfenster verschoben werden müssen, um ausreichend Zeit für das Nachladen des Akkus bereitzustellen. Hier greift das Gerät bevorzugt auf eingelernte Daten aus zurückliegenden Reinigungsfahrten zurück. Weiter kann der Planungsalgorithmus dem Nutzer Vorschläge anzeigen, wie die Zeitfenster anzupassen sind, um besser zu den vorgegebenen Reinigungsaufgaben zu passen.

Die Hinweise an den Nutzer können dabei in verschiedenen Varianten in der Reinigungs-App angezeigt werden. Beispielsweise eignen sich hierfür Warnhinweise, wenn die Kombination von vorgegebenen Reinigungsaufgaben und Zeitfenstern keine Lösung für ein Einplanen ermöglichen, und/oder Informationshinweise, wenn die gegebenen Zeitfenster keine optimale Lösung zulassen, die Aufgaben aber dennoch mit den gegebenen Randbedingungen eingeplant werden können.

Zusätzlich kann die Aufgabenverteilung mit einer Schaltfläche in der Reinigungs-App verknüpft sein, mit der der Nutzer dem mobilen, selbstfahrenden Gerät mitteilen kann, dass er am aktuellen Tag oder in den nächsten Stunden nicht gestört werden möchte. Hierfür eignet sich beispielsweise eine "heute nicht"-Taste, die bei Betätigung die Ausführung der geplanten Aufgaben verhindert. Das Gerät wird dann selbsttätig versuchen, die ausgefallenen Aufgaben zu verschieben und neu einzuplanen, so dass alle Reinigungsaufgaben zuverlässig ausgeführt werden. Zusätzlich kann bei einem wiederholten Betätigen der "heute nicht"-Taste innerhalb des gleichen Zeitfensters ein Vorschlag durch die Reinigungs-App unterbreitet werden, dieses Zeitfenster zukünftig ganz oder zumindest zum Teil zu streichen. Dadurch passt sich das Gesamtsystem vorzugsweise selbstständig an Umstellungen von Nutzerpräferenzen an. Das Löschen dieser Zeitfenster kann dabei beispielsweise gegebenenfalls mit einem zusätzlichen Hinweis an den Nutzer automatisch erfolgen. Alternativ ist eine halbautomatische Löschung vorgesehen, bei der eine Anfrage an den Nutzer und eine manuelle Bestätigung zum Löschen durch den Nutzer umgesetzt ist.

Zusätzlich oder alternativ können zur Einschränkung, Anpassung und/oder Optimierung der Zeitfenster zusätzliche Datenquellen mit einbezogen werden. Beispielsweise findet automatisch ein Abgleich mit einem Kalender des Nutzers und/oder weitere, im Haushalt lebende Personen statt, um Anwesenheits- und Abwesenheitszeiten mit dem mobilen, selbstfahrenden Gerät zu synchronisieren. Auch kann die Anwesenheit des Nutzers und/oder der weiteren, im Haushalt lebenden Personen durch das Vorhandensein des jeweiligen tragbaren Zusatzgeräts im selben Netzwerk wie das mobile, selbstfahrende Gerät detektiert werden. Zum Beispiel findet ein Präsenzsensor beziehungsweise mehrere Präsenzsensoren des jeweiligen tragbaren Zusatzgeräts Verwendung, welches die Daten dem mobilen, selbstfahrenden Gerät zur Verfügung stellt. Alternativ oder zusätzlich kann ein optionaler Präsenzsensor im mobilen, selbstfahrenden Gerät Anwendung finden. Durch diese zusätzlichen Datenquellen kann die Aufgabenplanung mit Vorteil noch dynamischer angepasst und weiter automatisiert werden.

Die Erfindung wird anhand der nachfolgenden, lediglich Beispiele darstellenden Ausführungen der Erfindung näher erläutert. Es zeigen:
- Figuren 1A, 5A, 6A, 6B:: jeweils eine schematische Anzeige einer Aufgabenplanung in einer App auf einem tragbaren Zusatzgerät bezogen auf ein erfindungsgemäßes Verfahren zum Betrieb eines mobilen, selbstfahrenden Geräts,
- Figuren 1B, 5B:: jeweils eine schematische Anzeige eines Zeitfensters in einer App auf einem tragbaren Zusatzgerät bezogen auf ein erfindungsgemäßes Verfahren zum Betrieb eines mobilen, selbstfahrenden Geräts, und
- Figuren 2, 3, 4:: jeweils eine Prinzipdarstellung einer Aufgabenplanung in einer App auf einem tragbaren Zusatzgerät bezogen auf ein erfindungsgemäßes Verfahren zum Betrieb eines mobilen, selbstfahrenden Geräts.

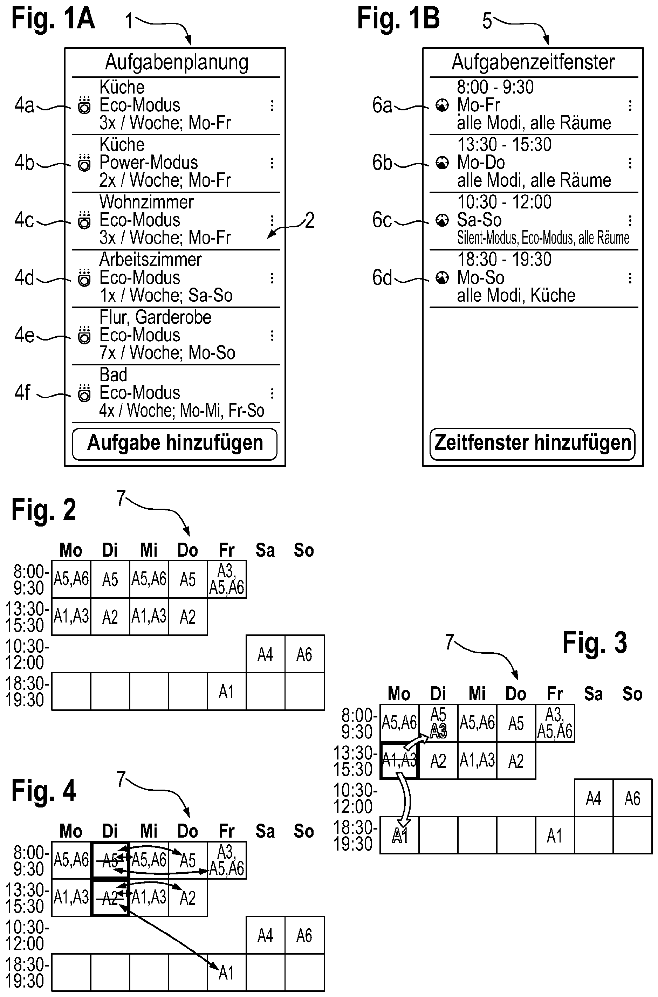

In Figur 1A ist ein Display 1 eines tragbaren Zusatzgeräts gezeigt, auf dem eine Reinigungs-App 2 geöffnet ist. Mit dem tragbaren Zusatzgerät, das insbesondere ein Handy ist, gibt ein Nutzer Vorgaben, Parameter und/oder Einstellungen für ein Betriebsverfahren eines mobilen, selbstfahrenden Geräts, insbesondere eines Saugroboters, vor. Hierbei definiert der Nutzer nicht, an welchen Tagen und zu welcher Zeit welches Reinigungsprogramm durchgeführt wird. Stattdessen legt der Nutzer lediglich fest, welche Bereiche der Wohnung wie oft pro Tag, pro Woche oder pro Monat gereinigt werden sollen, und/oder welche Wochentage hierfür zur Verfügung stehen. Dies gibt der Nutzer in der Reinigungs-App an, in der anschließend die Nutzerbefehle zum Beispiel listenartig mit jeweils einer Zeile 4a-4f pro Reinigungsaufgabe angezeigt werden. Weiter kann der Nutzer weitere Reinigungsparameter für die jeweilige Reinigungsaufgabe vorgeben, wie beispielsweise in welchem Reinigungsmodus die jeweilige Reinigungsaufgabe durchzuführen ist.

So ergibt sich zum Beispiel folgende Aufgabenplanung, die in der Reinigungs-App angezeigt wird:
A1: Küche, Eco-Modus, 3x / Woche, Mo-Fr
A2: Küche, Power-Modus, 2x / Woche, Mo-Fr
A3: Wohnzimmer, Eco-Modus, 3x / Woche, Mo-Fr
A4: Arbeitszimmer, Eco-Modus, 1x / Woche, Sa-So
A5: Flur, Garderobe, Eco-Modus, 7x / Woche, Mo-So
A6: Bad, Eco-Modus, 4x / Woche, Mo-Mi, Fr-So

In einem zweiten Eingabefenster 5 des Handys kann der Nutzer spezifizieren, welche Zeitfenster für die jeweilige Reinigung erlaubt sind, wie es beispielsweise in Figur 1B dargestellt ist. Neben der Angabe von Uhrzeiten, wie Start und Ende des Zeitfensters, kann der Nutzer die Zeitfenster bestimmten Wochentagen zuordnen und so verschiedene Randbedingungen für verschiedene Tage abbilden. Es ist auch möglich, für ein Zeitfenster zu beschränken, in welchen Räumen und in welchen Reinigungsmodi und/oder mit welchen Reinigungsparametern der Saugroboter in diesen Zeitfenstern arbeiten soll. Der Nutzer kann auf diese Weise definieren, dass der Saugroboter zum Beispiel nur an Orten und/oder mit Einstellungen arbeiten soll, an beziehungsweise mit denen der Nutzer nicht gestört wird.

Die einzelnen Zeitfenster werden listenartig mit jeweils einer Zeile 6a-6d pro Reinigungsaufgabe in der Reinigungs-App beispielsweise wie folgt angezeigt:
6a: 8:00-9:30 Uhr, Mo-Fr, alle Modi, alle Räume
6b: 13:30-15:30 Uhr, Mo-Do, alle Modi, alle Räume
6c: 10:30-12:00 Uhr, Sa-So, Silent-Modus, Eco-Modus, alle Räume
6d: 18:30-19:30 Uhr, Mo-So, alle Modi, Küche

Die Zuordnung der festgelegten Aufgaben der Zeilen 4a-4f zu den erlaubten Zeitfenstern der Zeilen 6a-6d erfolgt anschließend automatisch, selbsttätig beziehungsweise selbstständig durch den Saugroboter. Es wird also dem Saugroboter die Planung zur Abarbeitung von Reinigungsaufträgen überlassen. Mit der Reinigungs-App werden dem Saugroboter Zeitfenster zur Verfügung gestellt, in denen der Saugroboter frei einteilen kann, wann er welche Reinigungsaufgabe durchführt. Beispielsweise kann der Nutzer die Zeitfenster entsprechend seines Tagesablaufs definieren, zum Beispiel, wenn der Nutzer in der Arbeit ist und durch Reinigungsarbeiten zu Hause nicht gestört wird.

Bevorzugt nach jeder Änderung der Eingaben des Nutzers, besonders bevorzugt in regelmäßigen Abständen, wird ein Planungs- und Optimierungsalgorithmus die vom Nutzer definierten Aufgaben in die vorgebebenen Zeitfenster einplanen. Dies ist beispielsweise in Figur 2 dargestellt. Figur 2 zeigt eine Prinzipdarstellung der Aufgabenverteilung 7. Der Planungsalgorithmus optimiert die Verteilung der Aufgabe, sodass diese innerhalb der gegebenen Zeitfenster möglichst gleichmäßig über die Tage verteilt werden. Aufgaben der gleichen Räume, beispielsweise A1 und A2 betreffen jeweils die Küche, werden soweit möglich nicht an denselben Tagen ausgeführt.

Bevorzugt findet dabei eine Gleichverteilung der Reinigung derselben Räume über eine Woche statt. Ist beispielsweise die Reinigung eines Raumes dreimal pro Woche geplant und auf Werktage limitiert, werden die Aufträge bevorzugt Montag, Mittwoch und Freitag vorgesehen, sofern erlaubte Zeitfenster und übrige Reinigungsaufgaben dies erlauben.

Der Planungsalgorithmus kann hierfür vorzugsweise auf gespeicherte Protokolldaten zurückliegender Arbeitsaufträge zurückgreifen, um die benötigte Dauer beziehungsweise verbrauchte Akkuladung je Raum bei vorbestimmten Reinigungsparametern und notwendige Zeiten für ein Nachladen des Akkus in die Optimierung des Reinigungsplans einfließen zu lassen. So kann der Saugroboter vorab die Reinigungsaufträge in verschiedene Zeitfenster eines Tages verteilen, um das Nachladen des Akkus zu berücksichtigen.

Das Ergebnis der aktuellen Planung, also die Aufgabenverteilung 7, kann dem Nutzer bei Bedarf angezeigt werden, beispielsweise in einer Matrix-Tabelle mit Wochentagen und Zeitfenstern, wie es in Figur 2 gezeigt ist.

Kann der Saugroboter eine Reinigungsaufgabe nicht wie geplant, also gemäß Aufgabenverteilung 7 ausführen, schiebt der Saugroboter selbsttätig diese nicht ausgeführte Reinigungsaufgabe nachträglich auf ein anderes Zeitfenster, womit diese ausgefallene Reinigungsaufgabe automatisch, also ohne Nutzereingriff nachgeholt wird ("automated rescheduling"). Wird beispielsweise die Ausführung der Reinigungsaufgabe an einem Montagmorgen dadurch verhindert, dass der Nutzer kurz zuvor einen anderen Reinigungsauftrag spontan gestartet hat, oder dass er eine "heute nicht reinigen"-Taste betätigt hat, dann wird der verpasste Reinigungsauftrag am Montagnachmittag oder Dienstag eingeplant, je nachdem, wann ein Zeitfenster für die Reinigung verfügbar ist. Der Nutzer muss dadurch den bereits vorhandenen Reinigungsplan nicht selbst umplanen, und dabei darauf achten, ob sich eine von ihm durchgeführte Aktion mit einer geplanten Reinigungsaufgabe des Saugroboters überschneidet, sondern kann davon ausgehen, dass der Saugroboter selbst dafür sorgt, dass alle gewünschten Reinigungsaufgaben ausgeführt werden.

Eine Prinzipdarstellung einer derartigen Aufgabenverschiebung ist in Figur 3 dargestellt. Figur 3 zeigt eine geplante Aufgabeverteilung 7, bei der Verschiebungen notwendig sind. Ist die Ausführung von Aufgaben, hier A1 und A3, nicht möglich, so werden die Aufgaben für das nächste mögliche Zeitfenster eingeplant und dort eine erneute Ausführung versucht. Beispielsweise wird die ausgefallene Reinigungsaufgabe A1 automatisch von dem frühen Nachmittag am Montag auf den Abend am Montag verschoben. Die ausgefallene Reinigungsaufgabe A3 wird automatisch aufgrund des begrenzten Zeitfensters am Montagabend auf den Dienstagvormittag verschoben.

Um eine Dopplung beziehungsweise unnötige Wiederholungen von Reinigungsaufgaben zu vermeiden, prüft der Planungsalgorithmus bei der Optimierung und beim Verschieben von Reinigungsaufgaben, ob in den entsprechenden Zeitfenstern beziehungsweise am entsprechenden Tag bereits Reinigungsaufträge mit ähnlichen oder identischen Zielen eingeplant sind. Beispielsweise wird eine ausgefallene Reinigungsaufgabe, die der Nutzer einmal täglich eingeplant hat, nicht zwingend zweimal am gleichen Tag durch Verschiebung eingeplant. In diesem Fall ist es möglich, die ausgefallene Reinigungsaufgabe tatsächlich ausfallen zu lassen. Alternativ kann der Nutzer bevorzugt in den Einstellungen der Reinigungs-App präferieren, dass trotzdem eine Verschiebung stattfinden und die ausgefallene Reinigungsaufgabe am Folgetag zweimal stattfinden soll.

Eine Prinzipdarstellung einer ausfallenden Reinigungsaufgabe ist in Figur 4 dargestellt. Figur 4 zeigt eine geplante Aufgabeverteilung 7, bei der ein Abgleich mit bereits geplanten Reinigungsaufgaben stattfindet. Bei einer Verschiebung der Reinigungsaufgaben A5, A2 vom Dienstag, die nicht wie geplant stattgefunden haben, wird geprüft, ob in den nächstmöglichen Zeitfenstern ähnliche Aufgaben wie beispielsweise A1 und A2, die beide die Küche betreffen, eingeplant sind. Um unnötige Dopplungen von Reinigungsaufgaben, also ein mehrmaliges Ausführen ähnlicher Reinigungsaufgaben pro Tag beziehungsweise pro Zeitfenster, zu vermeiden, werden diese Reinigungsaufgaben nicht neu eingeplant, sondern fallen vollständig aus. A5 ist dabei eine täglich geplante Reinigungsaufgabe, die vorliegend gänzlich nach Abgleich ausfällt. A2 ist eine mit A1 ähnliche Aufgabe, die beide die Küche betreffen, ist damit also ebenfalls täglich eingeplant und fällt daher nach Abgleich vollständig aus.

Während der Planungsphase für die Aufgabenverteilung prüft der Planungs- und/oder Optimierungsalgorithmus nicht nur, welche Reinigungsaufgaben in welchen Zeitfenstern stattfinden können, sondern ebenfalls, ob die vorgesehenen Reinigungsaufgaben überhaupt in die vorgesehenen Zeitfenster eingepasst werden können. Wird dabei beispielsweise festgestellt, dass eine bestimmte Reinigungsaufgabe auf bestimmte Tage limitiert wurde, für die kein oder nur ein unzureichend langes Zeitfenster zur Verfügung gestellt wurde, so wird der Nutzer instantan darüber informiert. Wird keine Änderung der Aufgabenverteilung durch den Nutzer vorgenommen, können je nach Ausführung die Reinigungsaufgaben ausgelassen, oder mit zusätzlichem Hinweis an den Nutzer an Tagen mit gegebenen Zeitfenstern eingeplant werden. Die Information über fehlende Zeitfenster kann dem Nutzer direkt in den Planungsfenstern der Reinigungs-App angezeigt werden.

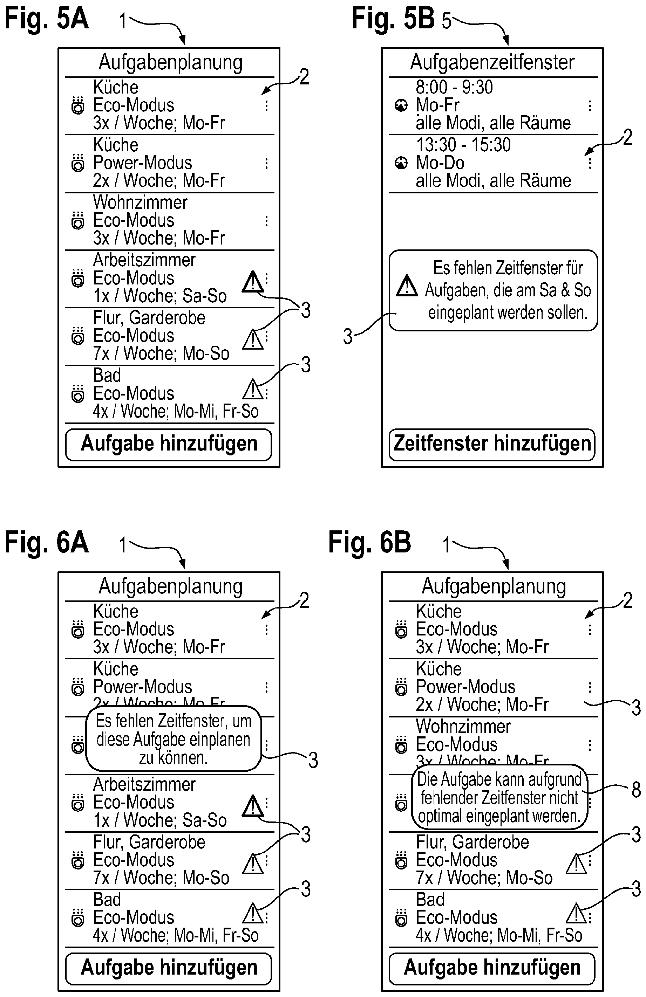

Eine beispielhafte Anzeige für unvollständig definierte Aufgaben ist in den Figuren 5A, 5B, 6A und 6B gezeigt. Dem Nutzer werden Hinweise 8 oder Warnungen 3 ausgegeben, wenn die von ihm definierten Aufgaben nicht zu den festgelegten Zeitfenstern passen.

Für den Nutzer ergibt sich hierdurch vorteilhaft, dass in einem ersten Schritt alle Reinigungsaufgaben vom Nutzer erstellt werden, die er durchführen lassen möchte. Anschließend kann der Nutzer in einem zweiten Schritt für die in der Reinigungs-App in den Hinweisen und Warnungen genannten Tage beziehungsweise Zeiten passende Zeitfenster definieren.

Das gleiche Vorgehen ist nicht nur bei fehlenden Zeitfenstern im Falle einer Limitierung der Reinigungsaufgaben auf bestimmte Wochentage, sondern auch bei einer Limitierung der Zeitfenster auf bestimmte Leistungsmodi und/oder Reinigungsparametern auf bestimmte Räume und/oder Flächen möglich. Das Vorgehen kann zudem durch Einbinden eingelernter Daten aus zurückliegenden Reinigungsfahrten, wie beispielsweise benötigte Dauer, benötigte Akkuladung, notwendige Ladezeiten und ähnliches, verbessert werden. Hierbei wird dem Nutzer zum Beispiel Rückmeldung darüber gegeben, ob die vorhandenen Zeitfenster für die vorgesehenen und geplanten Reinigungsaufgaben ausreichend sind, oder ob Zeitfenster verschoben werden müssen, um genug Zeit für das Nachladen des Akkus bereitzustellen. Vorzugsweise werden die Zeitfenster dabei so eingeplant, dass ausgefallene und zu verschiebende Reinigungsaufgaben aufgefangen werden können.

Die Reinigungs-App zeigt dem Nutzer dabei vorzugsweise Warnhinweise 3 an, falls die von ihm definierten Aufgaben nicht zu den festgelegten Zeitfenstern passen, oder die Reinigungsaufgaben unvollständig definiert sind. Figur 5A zeigt beispielsweise symbolisch Warnhinweise 3 bei unvollständig definierten Reinigungsaufgaben mit einem in einem Warndreieck angeordneten Ausrufezeichen an. Figur 5B zeigt zum Beispiel einen Warnhinweis 3 bei fehlenden Zeitfenstern, bei dem neben einen symbolischem Warnhinweis ein informativer schriftlicher Warnhinweis 3 angeführt ist. Der schriftliche Warnhinweis 3 informiert den Nutzer, dass mit den fehlenden Zeitfenstern keine Lösung für ein Einplanen aller Reinigungsaufgaben möglich ist.

Bevorzugt bietet der Planungsalgorithmus dem Nutzer Vorschläge an, wie die Zeitfenster angepasst werden können, um eine optimale Einplanung der Reinigungsaufgaben zu ermöglichen. In der Reinigungs-App 2 werden also Informationshinweise 8 ausgegeben, wenn die gegebenen Zeitfenster keine optimale Lösung zulassen, die Reinigungsaufgaben aber dennoch mit den gegebenen Randbedingungen eingeplant und ausgeführt werden können.

Figur 6A zeigt eine Auflistung der vorgesehenen Reinigungsaufgaben am Display 1 eines Handys, die in einer Reinigungs-App 2 angezeigt wird, bei der aufgrund fehlender Zeitfenster Reinigungsaufgaben nicht eingeplant werden können. Hier erhält der Nutzer einen direkten Warnhinweis 3. Für Reinigungsaufgaben, die aufgrund unzureichender Zeitfenster nicht optimal verteil werden können, erhält der Nutzer Informationshinweise 8 in der Reinigungs-App 2 am Display 1, wie es in Figur 6B gezeigt ist.

Bevorzugt kann der Nutzer in der Reinigungs-App beispielsweise mit einer "heute nicht"-Taste mitteilen, dass er am aktuellen Tag oder die nächsten Stunden keine Reinigungsaufgaben ausgeführt haben möchte (nicht dargestellt). Das Drücken dieser Taste verhindert die Ausführung von geplanten Reinigungsaufgaben. In diesem Fall verschiebt der Saugroboter automatisch und selbsttätig die ausgefallenen Reinigungsaufgaben und plant diese neu ein, so dass alle vorgesehenen Reinigungsaufgaben automatisch und ohne Nutzereingriff zuverlässig ausgeführt werden.

## Patentansprüche

1. Verfahren zum Betrieb eines mobilen, selbstfahrenden Geräts, insbesondere eines Bodenreinigungsgeräts wie ein Saug- und/oder Kehr- und/oder Wischroboter, bei dem ein Nutzer an einem trabgaren Zusatzgerät vorgibt, welche zumindest eine Reinigungsaufgabe (4a-4f) in zumindest einem vorgegebenen Zeitfenster (6a, 6b, 6c, 6d) durchzuführen ist, und eine Anzahl an Ausführungen in diesem vorgegebenen Zeitfenster (6a, 6b, 6c, 6d) sowie weitere Reinigungsparameter und/oder Randbedingungen bestimmt, wobei das mobile, selbstfahrende Gerät selbsttätig eine Aufgabenverteilung (7) generiert, wann welche Reinigungsaufgaben (4a-4f) in dem vorgegebenen Zeitfenster (6a, 6b, 6c, 6d) mit den vorgesehenen Reinigungsparametern und/oder Randbedingungen ausgeführt werden, und wobei die Aufgabenverteilung (7) mittels eines Planungsalgorithmus und/oder eines Optimierungsalgorithmus erstellt wird, **dadurch gekennzeichnet, dass** der Planungsalgorithmus und/oder Optimierungsalgorithmus Reinigungsaufträge mit ähnlichem oder identischem Ziel möglichst gleichmäßig über das Zeitfenster (6a, 6b, 6c, 6d) verteilt.

2. Verfahren nach Anspruch 1, wobei von dem mobilen, selbstfahrenden Gerät die Aufgabenverteilung (7) automatisch durchgeführt wird.

3. Verfahren nach einem der vorhergehenden Ansprüche, wobei eine vom Nutzer geplante, aber unvollständig durchgeführte oder verhinderte Reinigungsaufgabe (4a-4f) von dem mobilen, selbstfahrenden Gerät neu eingeplant wird.

4. Verfahren nach einem der vorhergehenden Ansprüche, wobei die weiteren Reinigungsparameter und/oder Randbedingungen der Reinigungsmodus, die Reinigungsleistung, die maximale Lautstärke und/oder die Wassermenge sind.

5. Verfahren nach einem der vorhergehenden Ansprüche, wobei für die auszuführenden Reinigungsaufgaben (4a-4f) ein gemeinsames Zeitfenster (6a, 6b, 6c, 6d) und/oder zumindest teilweise unterschiedliche Zeitfenster (6a, 6b, 6c, 6d) vorgegeben werden.

6. Verfahren nach einem der vorhergehenden Ansprüche, wobei das Zeitfenster (6a, 6b, 6c, 6d) bestimmte Wochentage und/oder Uhrzeiten umfasst.

7. Verfahren nach einem der vorhergehenden Ansprüche, wobei der Planungsalgorithmus und/oder Optimierungsalgorithmus auf gespeicherte Protokolldaten zurückliegender Reinigungsaufträge zurückgreift.

8. Verfahren nach einem der vorhergehenden Ansprüche, wobei dem Nutzer fehlende Zeitfenster (6a, 6b, 6c, 6d) als Warnhinweise (3) und/oder Informationshinweise (8) zu einer verbesserten Aufgabenverteilung (7) an dem tragbaren Zusatzgerät angezeigt werden.

## Claims

1. Method for operating a mobile, self-propelled appliance, in particular a floor-cleaning appliance such as a vacuuming and/or sweeping and/or mopping robot in which a user specifies on a portable additional device which at least one cleaning task (4a-4f) is to be executed in at least one predetermined time window (6a, 6b, 6c, 6d), and determines a number of executions in this predetermined time window (6a, 6b, 6c 6d) and further cleaning parameters and/or boundary conditions wherein the mobile, self-propelled appliance generates, in a self-acting manner, a task allocation (7) when which cleaning tasks (4a-4f) are to be performed in the predetermined time window (6a, 6b, 6c, 6d) using the specified cleaning parameters and/or boundary conditions, and wherein the task allocation (7) is created by means of a scheduling algorithm and/or an optimisation algorithm, **characterised in that** the scheduling algorithm and/or optimisation algorithm allocates cleaning tasks that have similar or identical goals as evenly as possible over the time window (6a, 6b, 6c, 6d).

2. Method according to claim 1, wherein the task allocation (7) is automatically performed by the mobile, self-propelling appliance.

3. Method according to one of the preceding claims, wherein a cleaning task (4a-4f) that was scheduled by the user, but was partially executed or prevented, is rescheduled by the mobile, self-propelling appliance itself.

4. Method according to one of the preceding claims, wherein the further cleaning parameters and/or boundary conditions are the cleaning mode, the cleaning performance, the maximum volume and/or the quantity of water.

5. Method according to one of the preceding claims, wherein a common time window (6a, 6b, 6c, 6d) and/or at least partially different time windows (6a, 6b, 6c, 6d) are specified for the cleaning tasks (4a-4f) to be executed.

6. Method according to one of the preceding claims, wherein the time window (6a, 6b, 6c, 6d) comprises specific days of the week and/or times of day.

7. Method according to one of the preceding claims, wherein the scheduling algorithm and/or optimisation algorithm uses stored log data from previous cleaning tasks.

8. Method according to one of the preceding claims, wherein the user is shown unavailable time windows (6a, 6b, 6c, 6d) as warning notifications (3) and/or information notifications (8) regarding an improved task allocation (7) on the portable additional device.

## Revendications

1. Procédé d'exploitation d'un appareil mobile automoteur, en particulier d'un appareil de nettoyage de sol tel qu'un robot aspirateur et/ou balayeur et/ou laveur, dans lequel un utilisateur détermine sur un appareil supplémentaire portatif quelle au moins une tâche de nettoyage (4a-4f) est à effectuer dans au moins un intervalle de temps prédéfini (6a, 6b, 6c, 6d), et un nombre d'exécutions dans cet intervalle de temps prédéfini (6a, 6b, 6c, 6d) ainsi que des paramètres de nettoyage et/ou conditions aux limites supplémentaires, dans lequel l'appareil mobile automoteur génère automatiquement une répartition des tâches (7) indiquant quelles tâches de nettoyage (4a-4f) sont effectuées dans l'intervalle de temps prédéfini (6a, 6b, 6c, 6d) avec les paramètres de nettoyage et/ou les conditions aux limites prévu(e)s, et dans lequel la répartition des tâches (7) est établie au moyen d'un algorithme de planification et/ou d'un algorithme d'optimisation, **caractérisé en ce que** l'algorithme de planification et/ou l'algorithme d'optimisation réparti(ssen)t les tâches de nettoyage ayant un objectif semblable ou identique de façon aussi uniforme que possible sur l'intervalle de temps (6a, 6b, 6c, 6d).

2. Procédé selon la revendication 1, dans lequel l'appareil mobile automoteur effectue automatiquement la répartition des tâches (7).

3. Procédé selon l'une des revendications précédentes, dans lequel l'appareil mobile automoteur replanifie une tâche de nettoyage (4a-4f) planifiée par l'utilisateur mais exécutée de façon incomplète ou empêchée.

4. Procédé selon l'une des revendications précédentes, dans lequel les paramètres de nettoyage et/ou conditions aux limites supplémentaires sont le mode de nettoyage, la puissance de nettoyage, le volume sonore maximal et/ou la quantité d'eau.

5. Procédé selon l'une des revendications précédentes, dans lequel un intervalle de temps commun (6a, 6b, 6c, 6d) et/ou des intervalles de temps au moins partiellement différents (6a, 6b, 6c, 6d) sont prédéfinis pour les tâches de nettoyage à exécuter (4a-4f).

6. Procédé selon l'une des revendications précédentes, dans lequel l'intervalle de temps (6a, 6b, 6c, 6d) comprend des jours de la semaine et/ou des heures déterminé(e)s.

7. Procédé selon l'une des revendications précédentes, dans lequel l'algorithme de planification et/ou l'algorithme d'optimisation utilise(nt) des données de protocole enregistrées provenant de tâches de nettoyage antérieures.

8. Procédé selon l'une des revendications précédentes, dans lequel les intervalles de temps manquants (6a, 6b, 6c, 6d) sont affichés à l'utilisateur sous forme d'avertissements (3) et/ou d'informations (8) pour une meilleure répartition des tâches (7), sur l'appareil supplémentaire portatif.
